# EUROPÄISCHE PATENTANMELDUNG

(11) **EP 1 349 252 A2**
(43) Veröffentlichungstag der Anmeldung: **01.10.2003**
(21) Anmeldenummer: 03006461.2
(22) Anmeldetag: 21.03.2003
(51) Int. Cl.: H02H 7/00, H05B 39/04

(54) **Leuchtenadapter zur Verwendung als Kurzschlusssicherung oder Dimmer**

(30) Priorität: 22.03.2002 DE 20204657 U
(71) Anmelder: Weinhuber, Konrad, 81371 München (DE)
(72) Erfinder: Weinhuber, Konrad, 81371 München (DE)
(74) Vertreter: Becker Kurig Straus

(57) **Zusammenfassung**

Offenbart wird ein Leuchtenadapter zur elektrisch leitenden Verbindung einer Leuchte mit einem Niedervolt-Spannungsversorgungssystem, wobei die Leuchte durch den Leuchtenadapter über Leitungsabschnitte (2) mit Versorgungsspannung versorgbar ist, und ist gekennzeichnet durch eine Kurzschlusssicherung (1a, 1b) mit einer Steuereinrichtung (3), mittels derer ein Kurzschlussmesswert mit einem Grenzwert vergleichbar und abhängig vom Ergebnis des Vergleichs ein Unterbrechungssignal generierbar ist, und mit einem Unterbrechungselement (4), das mittels des Unterbrechungssignals derart ansteuerbar ist, dass es in einem der Leitungsabschnitte (2) die Spannungsversorgung unterbricht

## Beschreibung

Die Erfindung betrifft einen Leuchtenadapter zur elektrisch leitenden Verbindung einer Leuchte mit einem Niedervolt-Spannungsversorgungssystem, wobei die Leuchte durch den Leuchtenadapter über Leitungsabschnitte mit Versorgungsspannung versorgbar ist.

Für eine Vielzahl bekannter seil- oder schienenförmiger Niedervolt-Spannungsversorgungssystemen sind gattungsgemäße Leuchtenadapter für vielfältige Anwendungsfälle allgemein bekannt. Der Leuchtenadapter stellt im Wesentlichen eine elektrisch leitende Verbindung zwischen zwei Polen eines Leuchtmittels und zwei Leitern des Niedervolt-Spannungsversorgungssystems dar. Ausgehend von einem mechanisch wirkenden Verbindungselement wird von jedem Leiter des Niedervolt-Spannungsversorgungssystems ein Leitungsabschnitt zu einem Aufnahmeelement geführt, in dem der Leitungsabschnitt mit einem Pol eines eingesetzten Leuchtmittels in Kontakt steht.

Niedervolt-Spannungsversorgungssysteme bieten die Möglichkeit, an nebeneinander hängenden Leitungsabschnitten eines Leuchtenadapters ohne weitere stützende Konstruktion das Aufnahmeelement anzubringen, so dass das Leuchtmittel unter dem Befestigungselement lediglich an den Leitungsabschnitten hängt. Derartige allgemein bekannte Pendelleuchten erfreuen sich wegen ihres filigranen Erscheinungsbildes zunehmender Beliebtheit bei der Beleuchtung sowohl von Privat- als auch von Geschäftsräumen.

Die - angesichts der geringen Spannungen - regelmäßig unisolierten Leitungsabschnitte derartiger Pendelleuchten in Niedervolt-Spannungsversorgungssystemen sind aber gegenüber unbedachten Bewegungen sehr empfindlich: Eine Berührung der Leitungsabschnitte untereinander führt zu einem Kurzschluss der Leiter des Niedervolt-Spannungsversorgungssystems und damit zu hohen Strömen in der Kontaktstelle. Dieses Kurzschlussrisiko steigt allgemein mit steigender Länge und sinkendem Abstand der frei neben einander hängenden Leitungsabschnitte. Das Kurzschlussrisiko ist grundsätzlich erhöht, wenn Raumnutzer unbeabsichtigt mit den Leitungsabschnitten oder einem daran hängenden Leuchtenkörper in Kontakt kommen können oder bei Zugluft - und die Wahrscheinlichkeit eines Kurzschlusses in einem System steigt statistisch mit der Anzahl der angeschlossenen Pendelleuchten.

Allgemein bekannt ist, an einem Eisen- oder Ringkerntransformator eines Niedervolt-Spannungsversorgungssystems - im Wesentlichen um diesen selber gegen Überhitzung zu sichern - primärseitig eine Schmelzsicherung vorzusehen. Im Falle eines Kurzschlusses von Leitungsabschnitten eines Leuchtenadapters, der mit dem Niedervolt-Spannungsversorgungssystems verbunden ist, steigt mit dem Sekundärstrom auf der Niedervoltseite des Transformators auch der Primärstrom an. Bei Erreichen des Grenzwertes der Schmelzsicherung wird die Spannungsversorgung primärseitig - und damit auch sekundärseitig im Niedervoltbereich und in der Kontaktstelle der Leitungsabschnitte des betreffenden Leuchtenadapters - unterbrochen. Bekannt ist es auch, an einem elektronischen Transformator einen Messwiderstand auf der Hochvoltseite vorzusehen, und bei über einen Grenzwert erhöhtem Spannungsabfall über diesem Messwiderstand den Transformator abzuschalten.

Gemeinsam ist den bekannten Kurzschlusssicherungen für Niedervoltsysteme, dass im Falle eines Kurzschlusses der Niedervoltbereich vollständig spannungsfrei geschaltet wird, also alle Leuchten - nicht nur diejenige, in der der Kurzschluss auftritt - abgeschaltet werden. Das Abschalten aller Leuchten behindert nicht nur die Fehlersuche und -behebung. Dieses Systemverhalten ist auch bei der Beleuchtung von Geschäftsräumen völlig unbrauchbar, wobei gerade hier - wie oben aufgeführt - aufgrund der hohen Anzahl der Leuchten das Risiko eines Kurzschlusses statistisch steigt.

Darüber hinaus gestaltet sich der Wechsel einer ausgelösten Schmelzsicherung eines Eisenoder Ringkerntransformators häufig als sehr aufwändig: Diese Transformatoren werden nämlich wegen der ihnen eigenen Baumaße in der Regel hinter Verkleidungen verborgen oder in unmittelbarer baulicher Einheit mit einem Schienen- oder Seilsystem in oder unter einer Raumdecke montiert.

Der Erfindung liegt die Aufgabe zugrunde, einen Leuchtenadapter vorzuschlagen, der einen Schutz seiner Bauteile - insbesondere im Falle eines Kurzschlusses - vor Überlast bei einfacher Handhabung gewährleistet. Ferner soll der Leuchtenadapter auch als Dimmer einsetzbar sein.

Ausgehend von den bekannten Leuchtenadaptern wird diese Aufgabe nach der Erfindung dahingehend gelöst, dass der Leuchtenadapter eine Kurzschlusssicherung aufweist, die mit einer Steuereinrichtung, mittels derer ein Kurzschlussmesswert mit einem Grenzwert vergleichbar und abhängig vom Ergebnis des Vergleichs ein Unterbrechungssignal generierbar ist, und mit einem Unterbrechungselement, das mittels des Unterbrechungssignals derart ansteuerbar ist, dass dieses in einem der Leitungsabschnitte die Spannungsversorgung unterbricht, versehen ist.

Mit der Anordnung einer Kurzschlusssicherung in einem Leuchtenadapter ist der grundsätzliche Nachteil der bekannten Kurzschlusssicherungen - das Abschalten aller Leuchten in einem System bei Kurzschluss in einer einzelnen Leuchte - bereits behoben. Ein Kurzschluss in einer einzelnen Leuchte beeinflusst den Betrieb der übrigen Leuchten in einem System nicht. Die Integration einer Steuereinrichtung, die in einem erfindungsgemäßen Leuchtenadapter das Unterbrechungselement ansteuert, ermöglicht andererseits den Betrieb einer Leuchte unabhängig von einer übergeordneten Kurzschlusssicherung.

Ein Kurzschlussmesswert im Sinne der Erfindung ist ein Messwert einer physikalischen Größe, mittels dessen ein Kurzschluss der Leitungsabschnitte detektierbar ist. Die Kurzschlusssicherung in einem erfindungsgemäßen Leuchtenadapter weist vorteilhaft in einem Leitungsabschnitt ein Widerstandselement auf. Die über diesem Widerstandselement abfallende Spannung kann als ein solcher Kurzschlussmesswert verwendet werden: Der Wert dieser Größe steigt nämlich bei einem Kurzschluss der Leitungselemente deutlich an.

Bevorzugt wird die über diesem Widerstandselement abfallende Spannung der Steuereinrichtung nicht unmittelbar, sondern über einen Tiefpassfilter zugeführt. Auf diese Weise werden hochfrequente Störungen der Versorgungsspannung - beispielsweise durch Netzschwankungen bei Schaltvorgängen an einem Verbraucher - nicht an die Steuereinrichtung weitergeleitet. Derartige Störungen führen dann nicht zum Auslösen der Kurzschlusssicherung.

Die Anzahl der Bauteile eines erfindungsgemäßen Leuchtenadapters wird vorteilhaft reduziert, wenn die über dem Unterbrechungselement abfallende Spannung als Kurzschlussmesswert verwendet wird. Das Unterbrechungselement übernimmt dann die Funktion des oben erwähnten Widerstandselements.

In einer bevorzugten Ausführungsform des erfindungsgemäßen Leuchtenadapters ist das Unterbrechungselement als Schaltelement ausgebildet, das mittels eines Schaltsignals derart ansteuerbar ist, dass es eine Unterbrechung der Spannungsversorgung aufhebt. Auf diese Weise ist das Unterbrechungselement für eine Mehrzahl von Unterbrechungsvorgängen einsetzbar, wodurch die Handhabung des erfindungsgemäßen Leuchtenadapters im Kurzschlussfall wesentlich vereinfacht ist. Das Schaltsignal kann hierbei durch einen manuellen Eingriff an dem Leuchtenadapter, durch eine übergeordnete Steuerung oder auch durch die in der Kurzschlusssicherung integrierte Steuereinrichtung ausgelöst werden.

Besonders bevorzugt wird ein Transistor als ein solches Schaltelement eingesetzt. Die Leistungsverluste durch den Innenwiderstand des Transistors werden vorteilhaft bei Verwendung eines Feldeffekttransistor minimiert. Zum Schalten einer in Niedervolt-Halogenlampen üblichen Spannung kommt insbesondere ein Hochstrom-Leistungs-Metalloxid-Feldeffekttransistor zum Einsatz. Bei dieser Bauart ist die Gate-Elektrode durch eine Metalloxidschicht vom Halbleiterkristall getrennt und dadurch der Steuerstrom stark reduziert.

Der erfindungsgemäße Leuchtenadapter ist universell sowohl mit Gleichspannung als auch mit Wechselspannung als Versorgungsspannung einsetzbar. In Wechselspannungssystemen steht insbesondere der Einsatz in Verbindung mit preiswerten und leistungsfähigen Eisenkernund Ringkerntransformatoren offen.

Die Kurzschlusssicherung weist dann vorteilhaft zwei Unterbrechungselemente auf. So können auch unter Wechselspannung Bauelemente zum Einsatz kommen, die nur eine Flussrichtung zulassen. Jeweils ein Unterbrechungselement ist dann einer Halbwelle der Versorgungsspannung zugeordnet. Bevorzugt werden die Unterbrechungselemente mit getrennten Unterbrechungssignalen aus gleichfalls getrennten Steuereinrichtungen angesteuert.

Die Unterbrechung der Spannungsversorgung bezogen auf eine Halbwelle ist in einer solchen Anordnung primär unabhängig von einer Unterbrechung in Bezug auf die andere Halbwelle. Eine Kopplung der Unterbrechungsvorgänge kann realisiert werden, wenn der Kurzschlussmesswert einer Steuereinrichtung über eine Messwertverarbeitungseinrichtung zugeführt wird. Insbesondere kann mittels einer solchen Messwertverarbeitungseinrichtung ein Kurzschluss, der während einer Halbwelle erkannt wird, als Sekundärmesswert an die Baugruppe aus Steuereinrichtung und Unterbrechungselement gemeldet werden, die der anderen Halbwelle zugeordnet ist. Dieser Sekundärmesswert ist hierbei vorteilhaft in einer solchen Weise eingerichtet, dass auch für die zweite Halbwelle ein Unterbrechungssignal generiert wird.

Bevorzugt weist eine derartige Messwertverarbeitungseinrichtung ein integriertes Logikelement auf, das den Kurzschlussmesswert in digitaler Form verarbeitet. Auf diese Weise können einerseits im Sinne einer preiswerten Massenfertigung Standardbauteile zum Einsatz kommen, andererseits eröffnet der Einsatz eines programmierbaren Elementes zur Verarbeitung des Kurzschlussmesswertes und zur Ansteuerung der Steuereinrichtung eine Fülle weiterer Anwendungen und Kombinationen des erfindungsgemäßen Leuchtenadapters.

Das Logikelement kann derart eingerichtet sein, dass es periodische Unterbrechungen der Spannungsversorgung initiieren kann. So kann der erfindungsgemäße Leuchtenadapter beispielsweise vorteilhaft die Funktion eines Dimmers übernehmen. Wenn diese periodischen Unterbrechungen in ausreichend kurzen Abständen auftreten, sind die einzelnen Schaltvorgänge aufgrund der Trägheit einerseits der Leuchtmittel, andererseits des menschlichen Auges für einen Raumnutzer nicht differenzierbar, sondern werden in Form einer insgesamt reduzierten Leuchtstärke wahrgenommen.

In einer bevorzugten Ausführungsform ist der erfindungsgemäße Leuchtenadapter als Dimmer ausgebildet, wobei er dann so ausgebildet ist, dass er anstelle eines Kurzschluß-Grenzwertes spezielle Grenzwerte von angeschlossenen Sensoren mißt und bei Bedarf die Stromversorgung periodisch unterbricht. Die Sensoren sind beispielsweise Näherungssensoren bzw. Bewegungsmelder auf Infrarot-Basis, akustische Sensoren oder Helligkeitssensoren oder generelle Kommunikationsmodule, die als "DALI" Module bekannt sind. Ferner sind WLAN (wireless LAN) Module anschließbar, die über einen zugeordneten Sender ansteuerbar sind. Die Sensoren sind variable und mit einstellbaren Grenzwerten versehen bzw. die Grenzwerte sind in der Steuerelektronik bzw. als Software eingestellt. Der als Dimmer ausgebildete Leuchtenadapter wirkt als Unterbrecher, wobei die Frequenz der Unterbrechung einstellbar und dadurch die Helligkeit der Leuchte steuerbar ist.

In dieser Ausführung ist der Kurzschlußmesswert ein Meßsignal des Sensors, das kontinuierlich oder periodisch auf Erreichen einer Grenzbedingung geprüft wird. Die Kurzschlußsicherung ist in diesem Fall eine Unterbrechungseinrichtung.

Das Logikelement kann auch mit einem Kommunikationselement kombiniert sein, mittels dessen es beispielsweise in regelmäßigen Abständen den jeweiligen Zustand der Kurzschlusssicherung an eine übergeordnete Auswerteeinrichtung übermittelt. Im Falle eines Kurzschlusses kann so gerade in ausgedehnten Anlagen der Ort der Störung ohne Blickkontakt ermittelt und eine zielgerichtete Behebung initiiert werden. Andererseits ist über ein solches Kommunikationselement an das Logikelement ein Impuls übermittelbar, der dieses zum Beispiel unabhängig von dem Auftreten eines Kurzschlusses zur Unterbrechung der Spannungsversorgung veranlasst. Auf diese Weise kann beispielsweise ein ferngesteuertes Schalten der Leuchte an dem erfindungsgemäßen Leuchtenadapter unabhängig vom Zustand anderer Leuchten an demselben Spannungsversorgungssystem realisiert werden.

Der Einsatz eines Logikelements erlaubt beispielsweise auch in besonders vorteilhafter Weise die Kombination mit einem an dem Leuchtenadapter angebrachten Bedienelement, das die Auswahl der weiteren, von dem Logikelement bereit gestellten Funktionen gestattet. Insbesondere kann ein solches Bedienelement auch in Form eines Sensorelements ausgestaltet sein, das eine Berührung eines Leitungsabschnittes durch einen Nutzer erkennt.

Die Kopplung der Unterbrechungsvorgänge in beiden Halbwellen im Kurzschlussfall kann theoretisch auf einen einzelnen Kurzschlussmesswert, beispielsweise die über der gesamten Anordnung abfallende Spannung zurückgreifen. Dies wäre beispielsweise mittels einer Gleichrichtung des Messwertes und anschließende Übermittlung an das Logikelement realisierbar. Die aufgrund der niedrigen Spannungsniveaus hierfür einzig geeigneten Bauteile sind jedoch aufgrund anderer Kennwerte - beispielsweise der Schwellspannung der notwendigen Dioden - kaum einsetzbar. Bevorzugt ist daher die getrennte Ermittlung und getrennte Auswertung zweier Kurzschlussmesswerte für die beiden Halbwellen der Versorgungsspannung.

Denkbar ist auch die Generierung eines Unterbrechungssignals für ein Unterbrechungselement unmittelbar in dem Logikelement, ohne Verwendung einer separaten Steuereinrichtung. Gegenüber diesen sind jedoch die Reaktionszeiten der heute wirtschaftlich einsetzbaren Logikelemente im Vergleich signifikant höher, so dass die primäre Entscheidung zur Unterbrechung der Spannungsversorgung in der Kurzschlusssicherung eines erfindungsgemäßen Leuchtenadapters bevorzugt in einer analogen Steuereinrichtung erfolgt.

Der erfindungsgemäße Leuchtenadapter weist bevorzugt einen von dem Niedervolt-Spannungsversorgungssystem gespeisten Grenzwertgeber auf, mittels dessen der an die Steuereinrichtung übermittelte Grenzwert generierbar ist. Durch Anpassung des Grenzwertes kann die Kurzschlusssicherung besonders einfach an unterschiedliche Lastfälle, beispielsweise Leuchtmittel mit unterschiedlichen elektrischen Leistungswerten angepasst werden. Im Sinne einer Reduzierung der Bauteile stellt der Grenzwertgeber besonders bevorzugt auch die Versorgungsspannungen für die digitalen und analogen Bauteile der Kurzschlusssicherung bereit.

In einer besonders vorteilhaften Ausführungsform des erfindungsgemäßen Leuchtenadapters wird dieser Grenzwertgeber mittels der über dem Unterbrechungselement abfallenden Spannung gespeist. Die Kurzschlusssicherung erfordert dann lediglich Anschlüsse an dem im Kurzschlussfall zu unterbrechenden Leitungsabschnitt. Sofern die über dem Unterbrechungselement abfallende Spannung im Regelbetrieb zur Speisung des Grenzwertgebers nicht ausreicht, kann dann ein von einem Kurzschlussfall unabhängiges Unterbrechungssignal vorgesehen werden, das ein Auslösen des Unterbrechungselements initiiert. Besonders bevorzugt wird dieses Unterbrechungssignal bedarfsweise oder in regelmäßigen Intervallen mittels eines Logikelementes, insbesondere mit dem bereits zwecks Kopplung der Auslösevorgänge in Bezug auf zwei Halbwellen in einen Wechselspannungssystem beschriebenen, generiert.

Bevorzugt ist der Leuchtenadapter dadurch gekennzeichnet, dass das Unterbrechungselement so gesteuert ist, dass es die Stromversorgung solange unterbricht wie die Kurzschlußbedingung besteht.

Weiterhin bevorzugt ist der Leuchtenadapter dadurch gekennzeichnet, dass die Kurzschlußbedingung in bestimmten zeitlichen Abständen geprüft wird. Damit wird verläßlich die Kurzschlußbedingung ermittelt und im Falle einer Aufhebung der Kurzschlußbedingung die Stromversorgung wieder hergestellt.

Gemäß einer alternativen Ausführung ist ein Leuchtenadapter zur elektrisch leitenden Verbindung einer Leuchte mit einem Niedervolt-Spannungsversorgungssystem vorgesehen, wobei die Leuchte durch den Leuchtenadapter über Leitungsabschnitte mit Versorgungsspannung versorgbar ist, der dadurch gekennzeichnet ist, dass eine Unterbrechungseinrichtung mit einer Steuereinrichtung vorgesehen ist, mittels derer ein Messsignal mit einem Grenzwert vergleichbar und abhängig vom Ergebnis des Vergleichs ein Unterbrechungssignal generierbar ist, und mit einem Unterbrechungselement, das mittels des Unterbrechungssignals derart ansteuerbar ist, dass es in einem der Leitungsabschnitte die Spannungsversorgung unterbricht, wobei an der Unterbrechungseinrichtung mindestens ein Sensor angeschlossen ist, wobei der Sensor das Meßsignal liefert.

Diese Ausführung ist bestimmt für den Einsatz des Leuchtenadapters als Dimmer.

Zur Erläuterung der Erfindung sind nachfolgend in schematischen Darstellungen Ausführungsbeispiele dargestellt. Hierbei sind gleichartige Elemente in verschiedenen Ausführungsformen mit gleicher Nummer und unterschiedlichen Buchstaben gekennzeichnet.

Es zeigen
- Fig. 1: die Kurzschlusssicherung eines ersten erfindungsgemäßen Leuchtenadapters
- Fig. 2: die Kurzschlusssicherung eines zweiten erfindungsgemäßen Leuchtenadapters

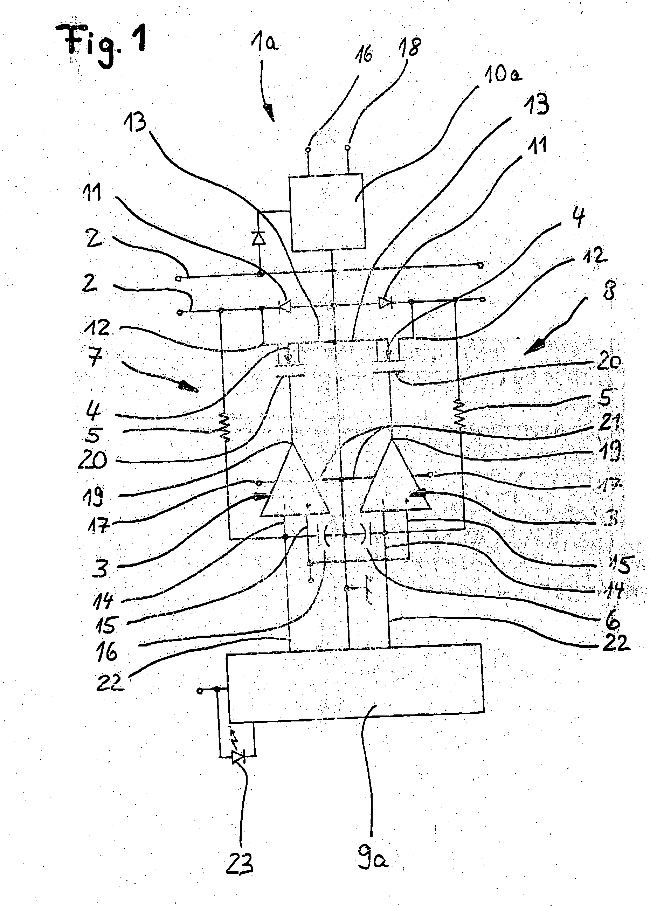

Figur 1 zeigt eine Kurzschlusssicherung 1a eines Leuchtenadapters zur Verbindung einer Leuchte mit einem Niedervolt-Spannungsversorgungssystem, wobei der Leuchtenadapter, die Leuchte und das Niedervolt-Spannungsversorgungssystem nicht näher dargestellt sind. Die Leuchte ist über zwei durch den Leuchtenadapter hindurch führende Leitungsabschnitte 2 mit Wechselspannung versorgbar.

Die Kurzschlusssicherung 1a weist jeweils zwei Steuereinrichtungen 3, Unterbrechungselemente 4, Widerstände 5 und Kondensatoren 6 auf, die eine der positiven Halbwelle der Versorgungsspannung zugeordnete erste Baugruppe 7 und eine baugleiche, der negativen Halbwelle zugeordnete zweite Baugruppe 8 bilden. Darüber hinaus weist die Kurzschlusssicherung 1a ein Logikelement 9a und einen Grenzwertgeber 10 auf.

Die Unterbrechungselemente 4 sind Hochstrom-Leistungs-Metalloxid-Feldeffekttransistoren (MOSFET, metal oxide semiconductor field effect transistor), also Feldeffekttransistoren, wie sie in allgemein bekannter Weise als unipolarer Transistor für die Großintegration mikroelektronischer Bauelemente Verwendung finden. Parallel zu jedem Unterbrechungselement 4 ist eine Schutzdiode 11 angeordnet, die einen vom Drain-Anschluss 12 zu Source-Anschluss 13 gerichteten Strom von dem Unterbrechungselement 4 ableitet.

Die Steuereinrichtungen 3 sind Operationsverstärker und dienen als Auswerteeinheiten. Jeweils ein Widerstand 5 und ein Kondensator 6 bilden einen Tiefpassfilter, über den die über dem zugeordneten Unterbrechungselement 4 abfallende Spannung der zugeordneten Steuereinrichtung 3 an einem ersten Eingang 14 zugeführt ist. Der zweite Eingang 15 der Steuereinrichtungen 3 ist jeweils mit einer Referenzspannung beschaltet, die in nicht dargestellter Weise an einem ersten Ausgang 16 des Grenzwertgebers 10 abgegriffen ist. Die Steuereinrichtungen 3 sind an einem dritten Eingang 17 in gleichfalls nicht dargestellter Weise mit einer Versorgungsspannung aus einem zweiten Ausgang 18 des Grenzwertgebers 10 beaufschlagt. Die Ausgänge 19 der Steuereinrichtungen 3 sind jeweils mit dem Gate-Anschluss 20 des zugeordneten Unterbrechungselements 4 verbunden.

Die Kondensatoren 6, die vierten Eingänge 21 der Steuereinrichtungen 3, die Source-Anschlüsse 13 der Unterbrechungselemente 4, die hierzu jeweils parallel geschalteten Schutzdioden 11 und die Spannungsversorgung des Grenzwertgebers 10 sind zwischen der ersten Baugruppe 7 und der zweiten Baugruppe 8 auf ein gemeinsames Bezugsniveau geführt.

Das Logikelement 9a ist ein integrierter Schaltkreis (IC) an zwei Anschlüssen 22 gleichfalls mit den über den Unterbrechungselementen 4 abfallenden Spannungen beaufschlagt. Zwischengeschaltet ist jeweils ein nicht dargestelltes Digitalisierungselement, das bei Überschreiten eines Schwellwertes dieser Spannungen eine Spannung von 5 V (logische "1"), sonst 0 V gegen das Bezugsniveau (logische "0") an das Logikelement 9a weiterleitet. An das Logikelement 9 ist weiterhin eine Leuchtdiode 23 angeschlossen.

Die Leuchtdiode ist im Falle der Ausbildung des Adapters als Dimmer dazu bestimmt, den Steuerungsvorgang optisch sichtbar zu machen. Alternativ kann ein akustischer Signalgeber vorgesehen sein, der ein akustisches Signal liefert.

Der Grenzwertgeber 10 ist zur Spannungsversorgung zwischen die Leitungsabschnitte 2 geschaltet und liefert an seinen Ausgängen 16 und 18 einerseits die Referenzsspannung, andererseits die Versorgungsspannung für die analogen und digitalen Bauteile der Kurzschlusssicherung 1a.

Im Betrieb des erfindungsgemäßen Leuchtenadapters liegt zwischen den Leitungsabschnitten 2 eine Wechselspannung von 12 V und 50 Hz an. Die Ausgänge 19 der Steuereinrichtungen 3 liefern jeweils eine positive Spannung an den Gate-Anschluss 20 des zugeordneten Unterbrechungselements 4. Die Unterbrechungselemente 4 geben den Stromfluss für die jeweils zugeordneten Halbwellen frei. Über den Unterbrechungselementen 4 mit einem inneren Widerstand von 50 mΩ fällt im Rhythmus der Versorgungsspannung eine Verlustspannung von höchstens 200 mV ab, die den Anschlüssen 22 des Logikelements 9a sind mit 0 V (logische "0") beaufschlagt sind. Die Wahl der Referenzspannung ist abhängig von den eingesetzten Transistoren und kann beispielsweise 2 V betragen.

Im Falle eines Kurzschlusses zwischen den Leitungsabschnitten 2 steigt der Strom in diesen deutlich an. Hierzu proportional steigt mit Beginn einer Halbwelle die über dem zugeordneten Unterbrechungselement 4 abfallende Spannung deutlich an. Oberhalb eines Schwellwertes von 2 V - also bei Überschreiten der Referenzspannung - schaltet die zugeordnete Steuereinrichtung 3 und liefert an ihrem Ausgang 19 keine Spannung mehr an den Gate-Anschluss 20 des zugeordneten Unterbrechungselements 4. Für die aktuelle Halbwelle unterbricht dieses Unterbrechungselement 4 die Spannungsversorgung.

Mit Unterbrechen der Spannungsversorgung an dem einer Halbwelle zugeordneten Unterbrechungselement 4 steigt dessen innerer Widerstand und damit die über diesem abfallende Spannung noch einmal schlagartig bis auf den Maximalwert der Wechselspannung, in diesem Beispiel also etwa 17 V an. Bei Erreichen eines (oberhalb der Referenzspannung liegenden) Schwellwertes schaltet das zugeordnete Digitalisierungselement und beaufschlagt einen Anschluss 22 des Logikelements 9 mit 5 V (logische "1").

Das Logikelement 9a verarbeitet intern dieses Signal in nicht dargestellter Weise und beaufschlagt seinerseits seinen anderen Anschluss 22 - und damit den ersten Eingang 14 der der anderen Halbwelle zugeordneten Steuereinrichtung 3 - mit einer über der Referenzspannung liegenden Spannung. Damit schaltet auch diese Steuereinrichtung 3 um und liefert an ihrem Ausgang 19 ebenfalls keine Spannung mehr an den Gate-Anschluss 20 des zugeordneten Unterbrechungselements 4.

Nach Ablauf von 0,5 s zeigt das Logikelement 9a über ein kurzes Aufleuchten eines Herstellerlogos im nicht dargestellten Gehäuse der Kurzschlusssicherung mittels der Leuchtdiode 23 einen Anschaltversuch an und schaltet zugleich seine Anschlüsse 22 auf das Bezugsniveau, also auf 0 V. Damit liegt die Spannung an den ersten Eingängen 14 beider Steuereinrichtungen 3 unterhalb der Referenzspannung. Beide Steuereinrichtungen 3 schalten erneut um und liefert an ihrem Ausgang 19 wieder eine positive Spannung an den Gate-Anschluss 20 des zugeordneten Unterbrechungselements 4, so dass diese die Unterbrechung der Spannungsversorgung für beide Halbwellen aufheben. Falls der Kurzschluss noch besteht, steigt erneut der Strom in den Leitungsabschnitten 2 und damit die über einem Unterbrechungselement 4 abfallende Spannung, und die zugeordnete Steuereinrichtung 3 löst erneut aus. Dieser Ablauf wiederholt sich, solange der Kurzschluss besteht.

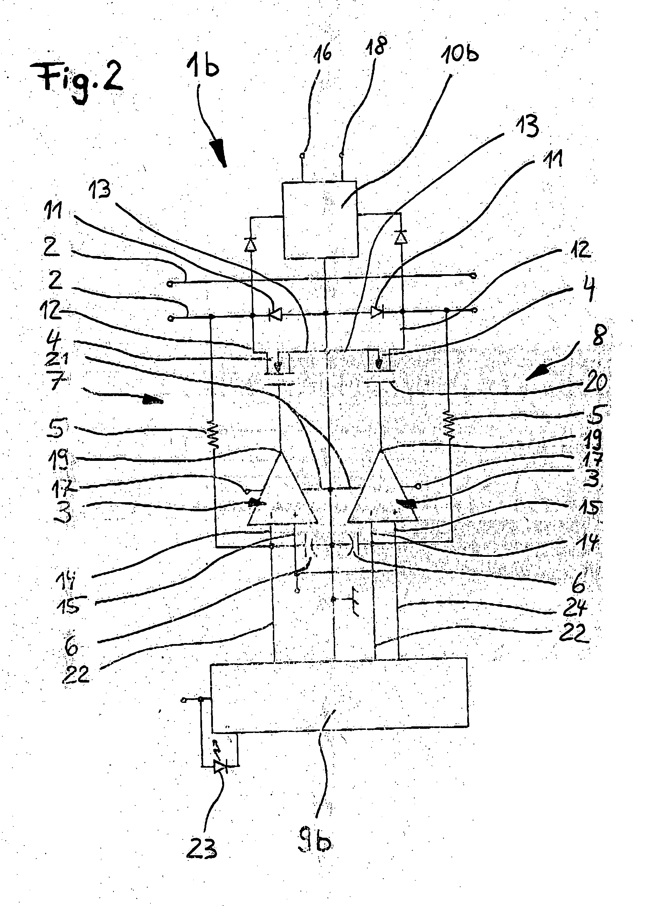

Die in Figur 2 gezeigte Kurzschlusssicherung 1b eines zweiten Leuchtenadapters unterscheidet sich von der in Figur 1 dargestellten durch die Spannungsversorgung des Grenzwertgebers 10b. Dieser ist lediglich noch mit demselben Leitungsabschnitt 2, der mit der Kurzschlusssicherung 1b unterbrechbar ist. Der Grenzwertgebers 10b verwendet die über den Unterbrechungselementen 4 abfallende Spannung zur eigenen Energieversorgung.

Zum regelmäßigen Aufladen des Grenzwertgebers 10b schaltet das Logikelement 9b in regelmäßigen Abständen kurzzeitig seinen Ausgang 24 auf das Bezugsniveau. Unabhängig von einem Kurzschluss der Leitungsabschnitte 2 ist dann die an den ersten Eingängen 14 der Steuereinrichtungen 3 anliegende Spannung größer als diejenige, die an deren zweiten Eingängen 15 anliegt. Die Steuereinrichtungen 3 liefern an ihren Ausgängen 19 keine Spannung mehr an den Gate-Anschluss 20 des jeweils zugeordneten Unterbrechungselements 4, so dass diese die Durchleitung unterbrechen. Wie bei der beschriebenen Unterbrechung in Folge eines Kurzschlusses steigt die über dem Unterbrechungselement 4 abfallende Spannung schlagartig auf den Maximalwert der Wechselspannung.

Das Logikelement 9b beendet den Ladevorgang des Grenzwertgebers 10b, indem es einerseits die Durchleitung seines Ausgangs 24 auf das Bezugsniveau beendet und andererseits-wiederum wie bei dem beschriebenen Anschaltversuch nach einem Kurzschluss - kurzzeitig seine Anschlüsse 22 auf das Bezugsniveau, also auf 0 V, schaltet. Somit liegt die an den ersten Eingängen 14 der Steuereinrichtungen 3 anliegende Spannung unter derjenigen an deren zweiten Eingängen 15 und die Steuereinrichtungen 3 schalten über die Unterbrechungselemente 4 die Durchleitung wieder ein. Die Dauer der Unterbrechung der Spannungsversorgung des Leuchtmittels durch den erfindungsgemäßen Leuchtenadapter bleibt dabei so gering, dass sie für den Nutzer nicht sichtbar wird.

Die in den Figuren 1 und 2 dargestellten Kurzschlusssicherungen 1a und 1b sind ohne jede Änderung auch an einer Gleichspannungsversorgung einsetzbar. Abhängig von der Polarität der Gleichspannung ist entweder nur die erste Baugruppe 7 oder die zweite Baugruppe 8 aktiv. Die jeweils inaktive Baugruppe 7 oder 8 hat - bis auf den Spannungsabfall über ihrer Schutzdiode 11 keinen Einfluss auf die Vorgänge im System. Gleiches gilt auch für die von den Logikelementen 9a oder 9b initiierte Unterbrechung der Spannungsversorgung durch die Steuereinrichtung 3 der inaktiven Baugruppe 7 oder 8. Bei Fertigung einer ausschließlich für den Einsatz an einer Gleichspannungsversorgung vorgesehenen Kurzschlusssicherung 1a oder 1b bietet sich daher die Bestückung der ansonsten gleichen Platine ohne die Bauteile der inaktiven Baugruppe 7 oder 8 - und Überbrückung des Platzes der zugeordneten Schutzdiode 11-an.

## Patentansprüche

1. Leuchtenadapter zur elektrisch leitenden Verbindung einer Leuchte mit einem Niedervolt-Spannungsversorgungssystem, wobei die Leuchte durch den Leuchtenadapter über Leitungsabschnitte (2) mit Versorgungsspannung versorgbar ist, **gekennzeichnet durch** eine Kurzschlusssicherung (1a, 1b) mit einer Steuereinrichtung (3), mittels derer ein Kurzschlussmesswert mit einem Grenzwert vergleichbar und abhängig vom Ergebnis des Vergleichs ein Unterbrechungssignal generierbar ist, und mit einem Unterbrechungselement (4), das mittels des Unterbrechungssignals derart ansteuerbar ist, dass es in einem der Leitungsabschnitte (2) die Spannungsversorgung unterbricht.

2. Leuchtenadapter nach dem vorgenannten Anspruch, **dadurch gekennzeichnet, dass** die Kurzschlusssicherung (1a, 1b) ein Widerstandselement aufweist und dass der Kurzschlussmesswert die über dem Widerstandselement abfallende Spannung anzeigt.

3. Leuchtenadapter nach dem vorgenannten Anspruch, **dadurch gekennzeichnet, dass** die über dem Widerstandselement abfallende Spannung über einen Tiefpassfilter der Steuereinrichtung (3) zugeführt wird.

4. Leuchtenadapter nach Anspruch 2, **dadurch gekennzeichnet, dass** das Unterbrechungselement (4) zugleich das Widerstandelement ist.

5. Leuchtenadapter nach einem der vorgenannten Ansprüche, **dadurch gekennzeichnet, dass** das Unterbrechungselement (4) ein Schaltelement ist, das mittels eines Schaltsignals derart ansteuerbar ist, dass es eine Unterbrechung der Spannungsversorgung aufhebt.

6. Leuchtenadapter nach dem vorgenannten Anspruch, **dadurch gekennzeichnet, dass** das Schaltelement ein Transistor ist.

7. Leuchtenadapter nach dem vorgenannten Anspruch, **dadurch gekennzeichnet, dass** der Transistor ein Feldeffekt-Transistor, insbesondere ein Metalloxidhalbleiter-Feldeffekt-Transistor ist.

8. Leuchtenadapter nach einem der vorgenannten Ansprüche, **dadurch gekennzeichnet, dass** die Versorgungsspannung eine Gleichspannung ist.

9. Leuchtenadapter nach einem der vorgenannten Ansprüche 1 bis 7, **dadurch gekennzeichnet, dass** die Versorgungsspannung eine Wechselspannung ist und die Kurzschlusssicherung (1a, 1b) zwei den Halbwellen der Wechselspannung zugeordnete Unterbrechungselemente (4) aufweist.

10. Leuchtenadapter nach dem vorgenannten Anspruch, **dadurch gekennzeichnet, dass** die Kurzschlusssicherung (1a, 1b) eine Messwertverarbeitungseinrichtung aufweist, mittels derer ein Kurzschlussmesswert verarbeitbar ist, wobei die Messwertverarbeitungseinrichtung einer Steuereinrichtung (3) einen dem Messwert zugeordneten Sekundärmesswert dergestalt zuführt, dass diese ein Unterbrechungssignal generiert.

11. Leuchtenadapter nach dem vorgenannten Anspruch, **dadurch gekennzeichnet, dass** die Messwertverarbeitungseinrichtung ein Digitalisierungselement und ein integriertes Logikelement (9a, 9b) aufweist, wobei das Digitalisierungselement den Kurzschlussmesswert in digitalisierter Form dem Logikelement (9a, 9b) zuführt.

12. Leuchtenadapter nach einem der vorgenannten Ansprüche, **gekennzeichnet durch** einen Grenzwertgeber (10a, 10b), mittels dessen der Grenzwert generierbar ist, wobei der Grenzwertgeber (10a, 10b) von dem Niedervolt-Spannungsversorgungssystem gespeist wird.

13. Leuchtenadapter nach dem vorgenannten Anspruch, **dadurch gekennzeichnet, dass** der Grenzwertgeber (10a, 10b) Versorgungsspannungen für die digitalen und analogen Bauteile der Kurzschlusssicherung (1a, 1b) bereitstellt.

14. Leuchtenadapter nach einer der vorhergehenden Ansprüche, **dadurch gekennzeichnet, dass** das Unterbrechungselement (4) so gesteuert ist, dass es die Stromversorgung solange unterbricht wie die Kurzschlußbedingung besteht.

15. Leuchtenadapter nach Anspruch 14, **dadurch gekennzeichnet, dass** die Kurzschlußbedingung in bestimmten zeitlichen Abständen geprüft wird.

16. Leuchtenadapter nach Anspruch 12, **dadurch gekennzeichnet, dass** der Grenzwertgeber (10b) mittels der über dem Unterbrechungselement (4) abfallenden Spannung gespeist wird.

17. Leuchtenadapter zur elektrisch leitenden Verbindung einer Leuchte mit einem Niedervolt-Spannungsversorgungssystem, wobei die Leuchte durch den Leuchtenadapter über Leitungsabschnitte (2) mit Versorgungsspannung versorgbar ist, **gekennzeichnet durch** eine Unterbrechungseinrichtung (1a, 1b) mit einer Steuereinrichtung (3), mittels derer ein Messsignal mit einem Grenzwert vergleichbar und abhängig vom Ergebnis des Vergleichs ein Unterbrechungssignal generierbar ist, und mit einem Unterbrechungselement (4), das mittels des Unterbrechungssignals derart ansteuerbar ist, dass es in einem der Leitungsabschnitte (2) die Spannungsversorgung unterbricht, wobei an der Unterbrechungseinrichtung (1a,1b) mindestens ein Sensor angeschlossen ist, wobei der Sensor das Meßsignal liefert.
